# EUROPEAN PATENT APPLICATION

(11) **EP 1 381 209 A1**
(43) Date of publication of application: **14.01.2004**
(21) Application number: 03015194.8
(22) Date of filing: 04.07.2003
(51) Int. Cl.: H04M 1/64, H04M 1/725, H04M 3/58

(54) **Terminal providing call forwarding notification of calling party**

(30) Priority: 11.07.2002 JP 2002202096
(71) Applicant: FUJITSU LIMITED, Kawasaki-shi, Kanagawa 211-8588 (JP)
(72) Inventor: Noriyuki, Harada, Kawasaki-shi, Kanagawa 211-8588 (JP); Hiroyuki, Kanno, Kawasaki-shi, Kanagawa 211-8588 (JP)
(74) Representative: Körfer, Thomas, Dipl.-Phys.

(57) **Abstract**

There is provided such a communication terminal (100) that a caller can determine whether forwarding is to be allowed. A telephone terminal according to the invention forwards telephone communication that has income via a call processing signal input device (110), to a forwarding destination previously set in a substitute communication destination storage area (150). The telephone terminal receives a forwarding start or prohibition order signal from a sending source of telephone communication via the call processing signal input device (110), and starts or prohibits forwarding of the telephone communication. In addition, when the telephone terminal has received a call of telephone communication via the call processing signal input device (110), the telephone terminal transmits information stored in a forwarding information storage area (150) to the sending source before the telephone communication shifts to a talking state, and executes forwarding of the communication after the notice has been transmitted.

## Description

### BACKGROUND OF THE INVENTION

### 1. Field of the Invention

The present invention relates to a communication terminal such as a portable telephone terminal, an ISDN telephone terminal, or a facsimile terminal, and in particular to a communication terminal having a function of forwarding a received communication.

### 2. Description of Related Art

Heretofore, forwarding service of forwarding a telephone communication issued by a caller to a forwarding destination previously registered by a callee, and a telephone terminal capable of conducting such forwarding service have been known. In the conventional forwarding service or the like, however, it is determined by only an intention of the callee whether forwarding is to be allowed. In other words, once the callee registers forwarding service, all telephone communications are forwarded after the registration until the forwarding service is canceled.

It is now supposed that forwarding to a substitute communication destination such as a secretary is registered when the callee cannot talk because the callee is negotiating with some one or talking with a visitor. If in this case all telephone communications including unhurried, unimportant or possibly dispensable telephone communications that need not be originally forwarded are forwarded, then the labor of responding to all telephone communications and determining whether the communication is urgent is required at the substitute communication destination such as the secretary.

Furthermore, if all telephone communications including unhurried, unimportant or possibly dispensable telephone communications are forwarded, then there is caused a problem that resources of a system and a communication network used for such forwarding are used excessively by an amount corresponding to forwarding of telephone communications that originally need not be forwarded. There is also caused a problem that forwarding of communications that need not be forwarded results in wasteful communication expenses.

### SUMMARY OF THE INVENTION

In view of the problems, the present invention has been made. An object of the present invention is to provide a communication terminal in which a caller can determine whether the forwarding of communication is to be allowed.

A first communication terminal according to the present invention that achieves the object includes a forwarding section forwarding incoming communication to a previously set forwarding destination; and a forwarding control section receiving a forwarding allowance or prohibit order signal from a caller, and causing the forwarding section to allow forwarding of the communication or prohibit the forwarding according to the order signal.

A second communication terminal according to the present invention that achieves the object includes a forwarding section forwarding incoming communication to a previously set forwarding destination; a notice section transmitting a notice to the effect that the communication is forwarded on reception of a call of the communication, to a caller before the communication is shifted into a talking state; afterward, a forwarding start section causing the forwarding section to execute forwarding of the communication.

The first and second communication terminals of the present invention can be applied to portable telephone terminals or ISDN telephone terminals.

According to the first communication terminal of the present invention, a caller can determine whether forwarding is to be allowed by using a predetermined signal. According to the second communication terminal of the present invention, the caller can determine whether forwarding is to be allowed before a talking state, by receiving a notice before the telephone communication shifts into the talking state. For example, if forwarding is not necessary, the caller can cope therewith by, for example, disconnecting the telephone communication.

Since a decision as to whether forwarding is allowed is entrusted to the caller, unnecessary forwarding is suppressed. Therefore, the burden on the forwarding destination is reduced. In addition, the amount of resources used in the system and network is also reduced.

In the communication terminal of the present invention, the notice section may be one that transmits a notice utilizing short message service or one that transmits a notice utilizing electronic mail.

Herein, the "electronic mail" includes portable telephone mail as well.

In the communication terminal of the present invention, the forwarding section may be one that forwards telephone communication by using call deflection service or one that forwards telephone communication by using call transfer service . Or the forwarding section may be one that forwards telephone communication by using "Call Forwarding No Reply." 31

Preferably, the communication terminal of the present invention is provided with the forwarding cease section wherein, a time zone during which forwarding is effective is set and when the time zone is over, the forwarding cease section prohibits the forwarding section from forwarding the telephone communication.

According to the communication terminal having such a forwarding cease section, a time zone during which forwarding is previously known to be necessary can be set, and forwarding is prohibited when the time zone is over. As a result, unnecessary forwarding is suppressed.

### BRIEF DESCRIPTION OF THE DRAWINGS

FIG. 1 is a diagram showing an embodiment of a communication terminal according to the present invention;
FIG. 2 is a diagram showing a former stage of an operation procedure before communication incoming in a first forwarding mode;
FIG. 3 is a diagram showing a latter stage of an operation procedure before communication incoming in the first forwarding mode;
FIG. 4 is a diagram showing an operation procedure at the time of communication incoming in the first forwarding mode;
FIG. 5 is a diagram showing an operation procedure of forwarding cancel in the first forwarding mode;
FIG. 6 is a diagram showing an operation procedure at the time of communication incoming in a variant of the first forwarding mode;
FIG. 7 is a diagram showing an operation procedure at the time of communication incoming in a second forwarding mode;
FIG. 8 is a diagram showing an operation procedure on a caller conducted when forwarding is executed in the second forwarding mode;
FIG. 9 is a diagram showing an operation procedure on a callee conducted when forwarding is executed in the second forwarding mode;
FIG. 10 is a diagram showing an operation procedure before communication incoming in a third forwarding mode;
FIG. 11 is a diagram showing an operation procedure at the time of communication incoming in the third forwarding mode;
FIG. 12 is a diagram showing an operation procedure before communication incoming in a fourth forwarding mode; and
FIG. 13 is a diagram showing an operation procedure at the time of communication incoming in the fourth forwarding mode.

### DESCRIPTION OF THE PREFERRED EMBODIMENTS

Hereafter, embodiments of the invention will be described.

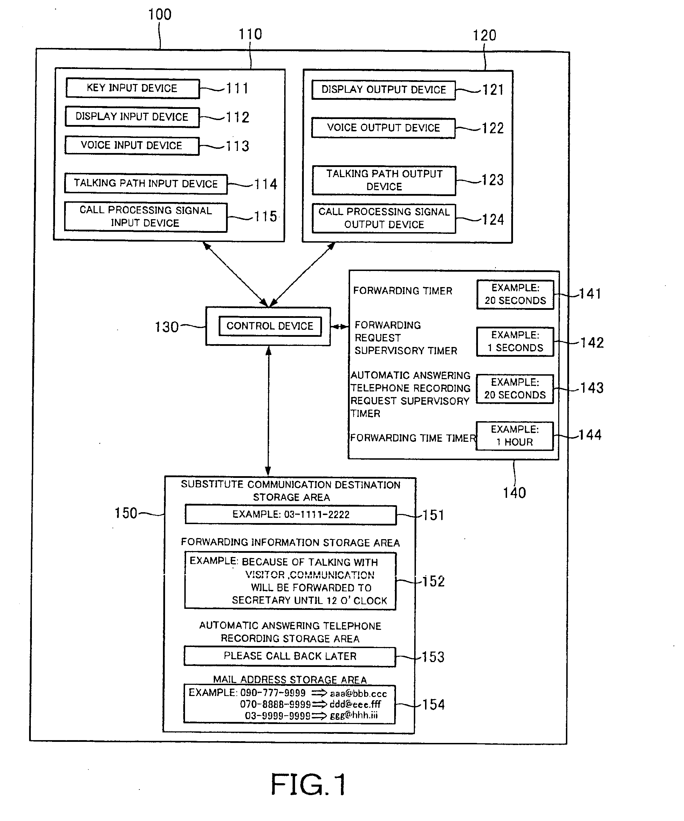

FIG. 1 is a diagram showing an embodiment of a communication terminal according to the invention.

While the communication terminal of the invention can be applied to a portable telephone terminal or an ISDN telephone terminal, an example in which the communication terminal of the invention is applied to a portable telephone terminal will now be described.

A telephone terminal 100 includes an input device group 110, an output device group 120, a control device 130, a timer group 140, and a storage device 150. In the present embodiment, these components operate compositely. As a result, the components function as sections referred to as a forwarding section, a forwarding control section, a notice section, a forwarding start section, and a forwarding cease section in the invention.

The input device group 110 includes a key input device 111 for accepting an input given by a keyboard or a ten key, a display input device 112 for accepting an input given from a display by means of a cursor, an execution key, or pen touch, a voice input device 113 for accepting a voice input given by using a microphone, a talking path input device 114 for accepting an input of a talking signal via an antenna, and a call processing signal input device 115 for accepting an input of a signal that represents connection control of call processing.

The output device group 120 includes a display output device 121 for displaying characters and an image on the display, a voice output device 122 for effecting voice outputting by using a speaker, a talking path output device 123 for outputting a talking signal via the antenna, and a call processing signal output device 124 for outputting a signal that represents connection control of call processing.

The timer group 140 includes a forwarding timer 141 for measuring elapse of a waiting time until forwarding to a substitute communication destination is started, a forwarding request supervisory timer 142 for effecting a decision on a forwarding requesting signal, an automatic answering telephone recording request supervisory timer 143 for measuring elapse of a waiting time until automatic answering telephone recording (i.e., sound recording in an automatic answering telephone function) is started, and a forwarding time timer 144 for measuring elapse of a time zone in which forwarding to the substitute communication destination is allowed.

The storage device 150 includes a substitute communication destination storage area 151 for storing a forwarding destination, i.e., a telephone number of a substitute communication destination, a forwarding information storage area 152 for storing forwarding information which indicates that forwarding is conducted, an automatic answering telephone recording storage area 153 for storing a voice recorded in the automatic answering telephone recording function and in a coded form, and a mail address storage area 154 for storing a mail address corresponding to a telephone number of a caller. The mail address stored in the mail address storage area 154 is used as destination when giving a notice of a telephone number of a substitute communication destination and the forwarding information in mail service.

The control device 130 executes processing on information and a signal input from each input device in the input device group 110, storage/takeout information into/from the storage device 150, and executes processing on information and signals output from the output device group 120, on the basis of results of measurements conducted by the timer group 140, and the like.

In the telephone terminal 100 shown in FIG. 1, there are a talking mode for conducting operation similar to that conducted when talking is effected in an ordinary telephone terminal, and a plurality of forwarding modes for forwarding incoming telephone communication. Hereafter, respective forwarding modes will be described. The telephone terminal of the present embodiment has the components shown in FIG. 1. In description of each forwarding mode, however, illustration of components that are not necessary for the description is omitted suitably.

First, a first forwarding mode in the telephone terminal 100 of the present embodiment will now be described.

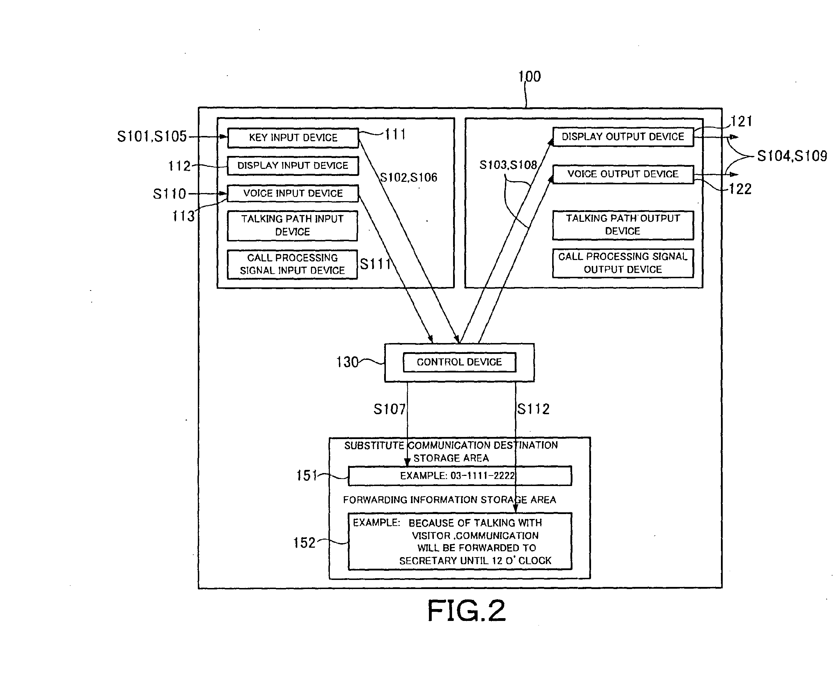

FIG. 2 is a diagram showing a former stage of an operation procedure before communication incoming in the first forwarding mode.

The user of the telephone terminal 100 inputs an instruction for ordering a telephone number of a substitute communication destination to be stored, by an operation of a special key provided on the key input device 111 to input the instruction, or by a special operation procedure provided on the key input device 111 using a ten key or the like (step S101). The key input device 111 notifies the control device 130 of the input instruction (step S102). For inputting the instruction, the display input device 112 may also be used. The display input device 112 functions in just the same way as inputting using the key input device 111. Hereafter, description of the instruction inputting using the display input device 112 will be omitted, and only instruction inputting using the key input device 111 will be described.

Upon being notified of the instruction, the control device 130 orders the display output device 121 and the voice output device 122 to output a request for a telephone number of a substitute communication destination (step S103). The display output device 121 and the voice output device 122 respectively output a voice and a character string to that effect (step S104).

Upon confirming such outputs, the user of the telephone terminal 100 inputs the telephone number of the substitute communication destination by operating the key input device 111 (step S105). The key input device 111 notifies the control device 130 of the telephone number (step S106). The control device 130 stores the telephone number of the substitute communication destination in the substitute communication destination storage area 151 (step S107). The control device 130 orders the display output device 121 and the voice output device 122 to output a request for information concerning forwarding (step S108). The display output device 121 and the voice output device 122 respectively output a voice and a character string to that effect (step S109).

Upon confirming such outputs, the user of the telephone terminal 100 inputs information concerning the forwarding, such as the substitute communication destination and until when forwarding is conducted, to the voice input device 113 by means of voice (step S110). The voice input device 113 converts the voice to an electric signal and gives the electric signal to the control device 130 (step S111). The control device 130 further converts the electric signal to a digital code and generates voice data. The control device 130 stores the voice data in the forwarding information storage area 152 (step S112).

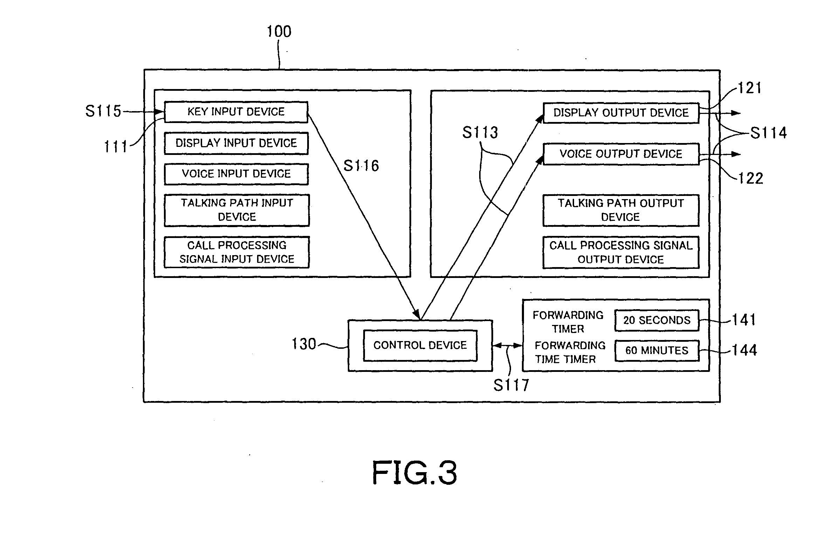

FIG. 3 is a diagram showing a latter stage of the operation procedure before communication incoming in the first forwarding mode.

After the step S112 of FIG. 2, the control device 130 orders the display output device 121 and the voice output device 122 to output a request for a waiting time required until forwarding to the substitute communication destination and a time zone for executing the forwarding (step S113). The display output device 121 and the voice output device 122 respectively output a voice and a character string to that effect (step S114) . Upon confirming such outputs, the user of the telephone terminal 100 inputs a waiting time (for example, 20 seconds) and a forwarding time zone (for example, 60 minutes from the forwarding to be allowed) by operating the key input device 111 (step S115). The input device 111 notifies the control device 130 of the waiting time and the forwarding time zone (step S116). The control device 130 sets the waiting time in the forwarding timer 141 and sets the forwarding time zone in the forwarding time timer 144 (step S117).

In the first forwarding mode, setting as heretofore described is executed before the communication incoming. As a result, the state of the telephone terminal 100 shifts to a state for forwarding telephone communication at the time of call incoming. When the state of the telephone terminal 100 shifts, the forwarding time timer 144 starts measurement.

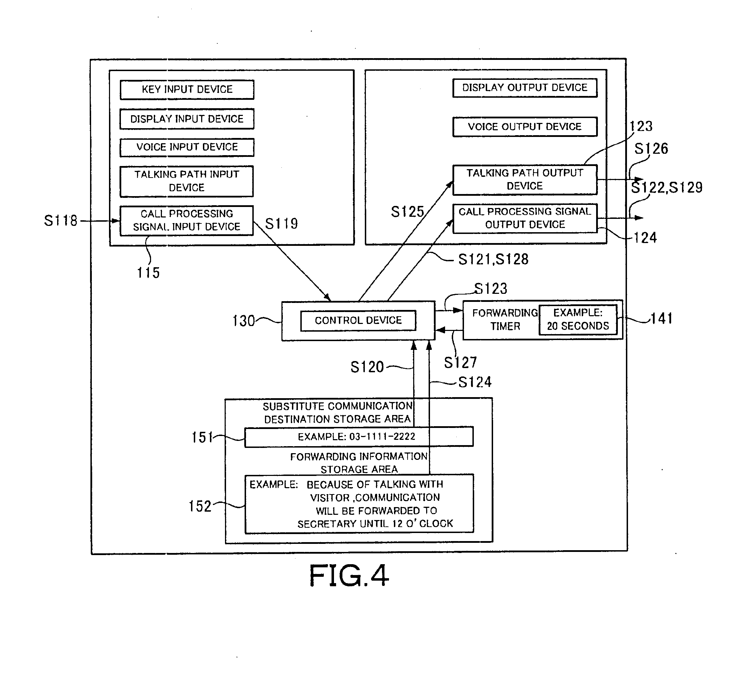

FIG. 4 is a diagram showing an operation procedure at the time of communication incoming in the first forwarding mode.

First, a communication incoming request is received by the call processing signal input device 115 (step S118). The call processing signal input device 115 notifies the control device 130 of the communication incoming request (step S119).

The control device 130 determines whether the call is a voice call on the basis of call information contained in the communication incoming request. If the call is a voice call, then the control device 130 determines whether a telephone number of a substitute communication destination is previously stored in the substitute communication destination storage area 151 (step S120). Upon making sure that the telephone number of the substitute communication destination is previously stored, the control device 130 orders the call processing signal output device 124 to return an alert signal (ALERT) and an answer signal (CONN) or only an answer signal (CONN) (step S121). The call processing signal output device 124 returns the alert signal (ALERT) and the answer signal (CONN), or only the answer signal (CONN) .(step S122). As a result, telephone communication comes into a talking state.

Furthermore, the control device 130 orders the forwarding timer 141 to start measurement (step S123), and reads out coded voice data stored in the forwarding information storage area 152 (step S124). And the control device 130 decodes the voice data read out and sends a resultant voice signal to the talking path output device 123 (step S125). The talking path output device 123 returns the voice signal (step S126). As a result, the caller is notified of information such as the substitute communication destination and until when forwarding is conducted. If the caller judges forwarding to be unnecessary, then the caller copes with this by, for example, disconnecting the telephone communication before forwarding.

If the telephone communication is not disconnected, then the control device 130 waits for timeout of the forwarding timer. Upon detection of the timeout (step S127), the control device 130 notifies the call processing signal output device 124 of a disconnection signal (DISC) provided with the telephone number of the substitute communication destination (step S128). The call processing signal output device 124 outputs the disconnection signal (DISC) to a telephone network (step S129). As a result, forwarding of telephone communication using call deflection service is executed.

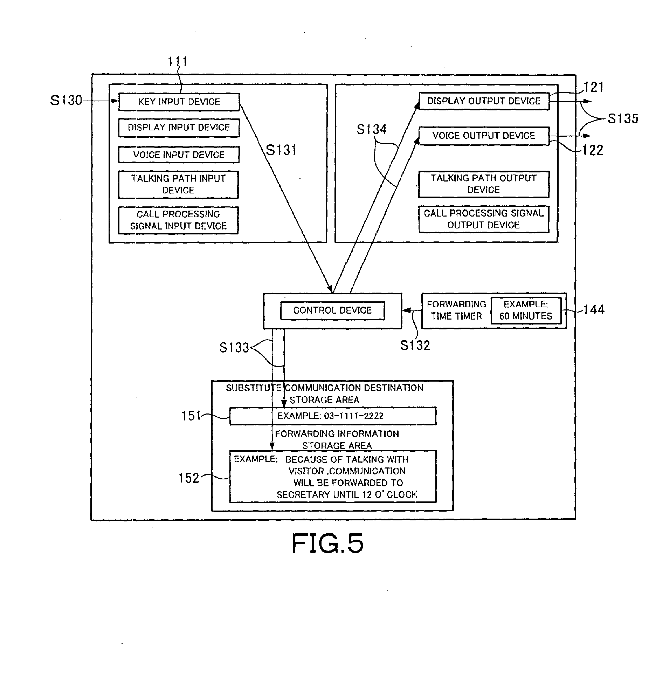

FIG. 5 is a diagram showing an operation procedure of forwarding cancel in the first forwarding mode.

The user of the telephone terminal 100 inputs an instruction of forwarding cancel, by an operation of a special key provided on the key input device 111 to input the instruction, or by a special operation procedure provided on the key input device 111 using a ten key or the like (step S130). In the case where the key input device 111 notifies the control device 130 of the input instruction (step S131), and in the case where the forwarding time timer 144 times up and the control device 130 is notified to that effect (step S132), the control device 130 initializes data stored in the substitute communication destination storage area 151 and data stored in the forwarding information storage area (step S133). As a result, forwarding is canceled, and a shift to the ordinary talking mode is effected. The control device 130 orders the display output device 121 and the voice output device 122 to output the cancellation of forwarding (step S134). The display output device 121 and the voice output device 122 respectively output a voice and a character string to that effect (step S135).

In the above description of the first forwarding mode, an example in which the waiting time is measured by using the forwarding timer 141 has been described. However, production of voice data stored in the forwarding information storage area 152 can supersede the measurement of the waiting time. Hereafter, such a variant of the first forwarding mode will be described.

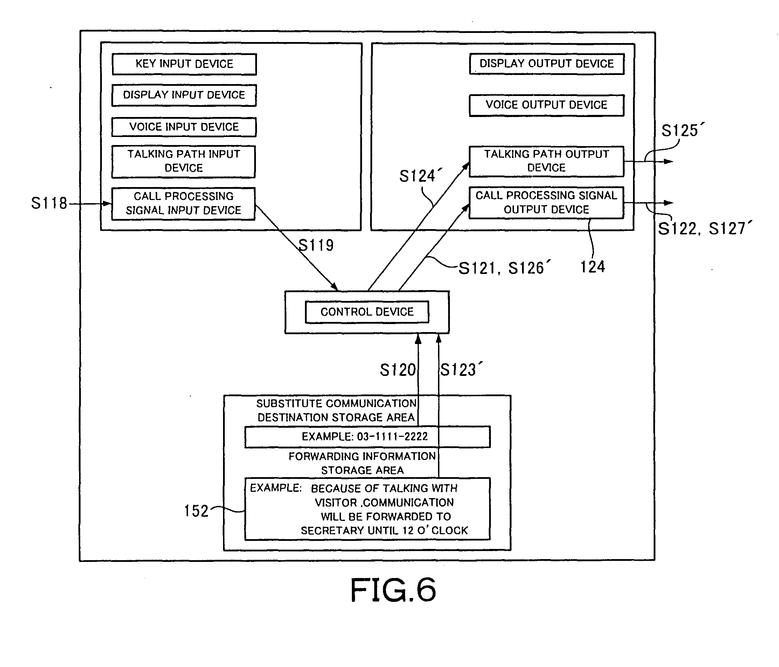

FIG. 6 is a diagram showing an operation procedure at the time of communication incoming in a variant of the first forwarding mode.

Also in this variant ,similarly to the above description, steps 118 to 122 are executed one after another, and the call processing signal output device 124 outputs the alert signal (ALERT) and the answer signal (CONN), or only the answer signal (CONN).

Thereafter, the control device 130 reads out coded voice data stored in the forwarding information storage area 152 (step S123'). And the control device 130 decodes the voice data read out and sends a resultant voice signal to the talking path output device 123 (step S124'). The talking path output device 123 returns the voice signal (step S125'). As a result, voice data stored in the forwarding information storage area 152 is produced, and the caller is notified of information such as the substitute communication destination and until when forwarding is conducted. If the caller judges forwarding to be unnecessary, then the caller copes with this by, for example, disconnecting the telephone communication before the notification of the information is finished.

If the telephone communication is not disconnected, then the control device 130 notifies the call processing signal output device 124 of a disconnection signal (DISC) provided with the telephone number of the substitute communication destination (step S126'). The call processing signal output device 124 outputs the disconnection signal (DISC) to the telephone network (step S127'). As a result, forwarding of telephone communication using call deflection service is executed.

A second forwarding mode will now be described. In the second forwarding mode, the caller can select forwarding or automatic answering telephone recording. An operation procedure before communication incoming in the second forwarding mode is the same as that before communication incoming in the first forwarding mode except setting of the automatic answering telephone recording request supervisory timer 143 is conducted instead of setting of the forwarding timer 141. Therefore, description thereof will be omitted.

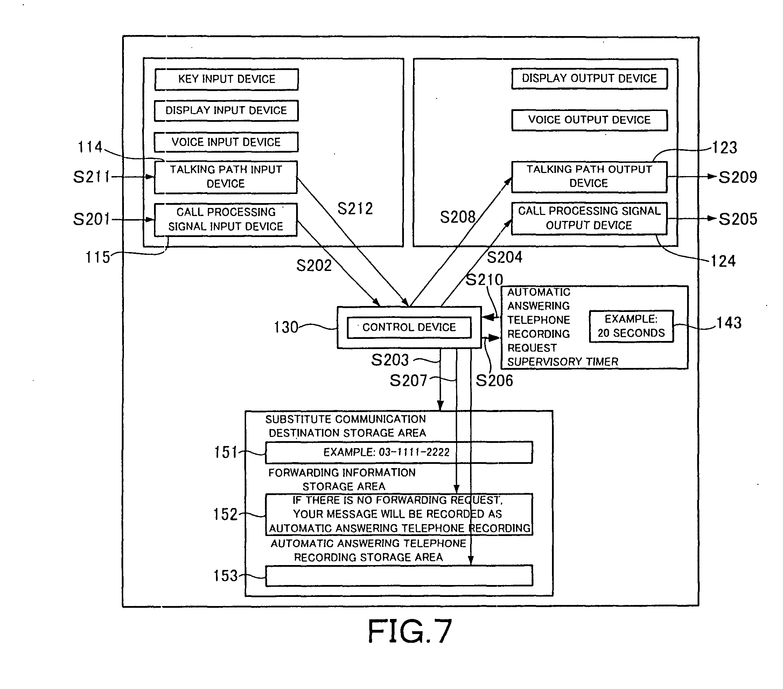

FIG. 7 is a diagram showing an operation procedure at the time of communication incoming in the second forwarding mode.

In the second forwarding mode as well, first, a communication incoming request is received by the call processing signal input device 115 (step S201). The call processing signal input device 115 notifies the control device 130 of the communication incoming request (step S202). The control device 130 determines whether the call is a voice call on the basis of call information contained in the communication incoming request. If the call is a voice call, then the control device 130 determines whether a telephone number of a substitute communication destination is previously stored in the substitute communication destination storage area 151 (step S203). Upon making sure that the telephone number of the substitute communication destination is previously stored, the control device 130 orders the call processing signal output device 124 to return an alert signal (ALERT) and an answer signal (CONN), or an answer signal (CONN) (step S204). The call processing signal output device 124 returns the alert signal (ALERT) and the answer signal (CONN), or an answer signal (CONN) (step S205).

In the second forwarding mode, the control device 130 orders the automatic answering telephone recording request supervisory timer 143 to start measurement (step S206), and reads out coded voice data stored in the forwarding information storage area 152 (step S207). And the control device 130 decodes the voice data read out and sends a resultant voice signal to the talking path output device 123 (step S208). The talking path output device 123 returns the voice signal (step S209). As a result, the caller is notified of information such as the substitute communication destination and until when forwarding is conducted. If the caller judges forwarding to be unnecessary, then the caller waits with intactness for some time. The control device 130 waits for timeout of the automatic answering telephone recording supervisory timer 143. Upon detection of the timeout (step S210), the control device 130 starts automatic answering telephone recording.

If automatic answering telephone recording is started, then a voice signal from the caller is input to the talking path input device 114 (step S211) and the talking path input device 114 notifies the control device 130 of the input voice signal (step S212). The control device 130 codes the input voice signal and stores a resultant coded voice signal in the automatic answering telephone recording area 153.

In the second forwarding mode, forwarding is executed if the caller issues a predetermined forwarding request before the automatic answering telephone recording supervisory timer 143 expires.

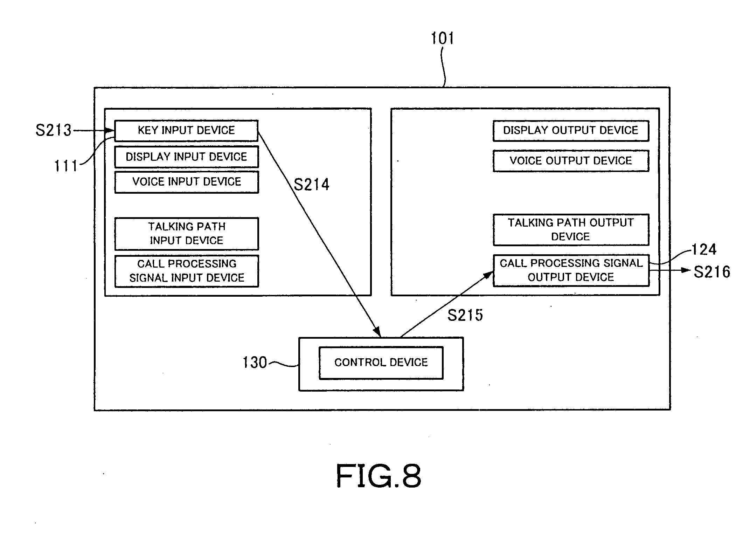

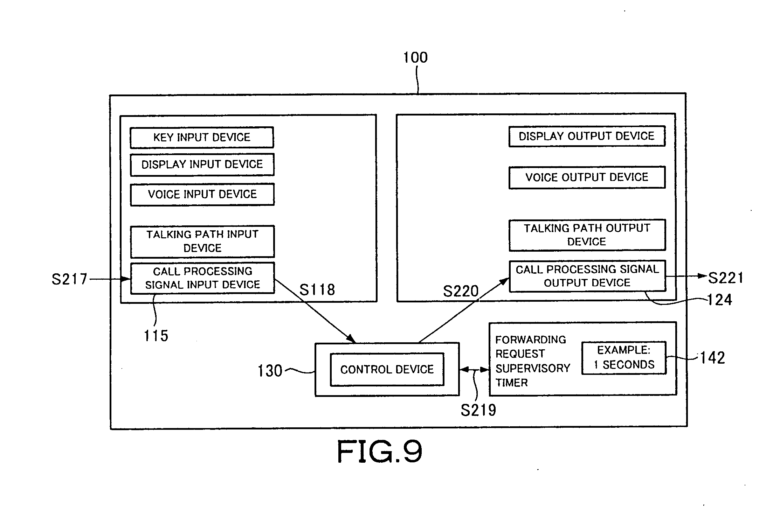

FIGS. 8 and 9 are diagrams showing an operation procedure at the time when forwarding is executed in the second forwarding mode. FIG. 8 shows an operation procedure on the caller. FIG. 9 shows an operation procedure on the callee.

A telephone terminal 101 on the caller is a telephone terminal similar to the telephone terminal 100 on the callee shown in FIG. 1. Duplicated description thereof will be omitted.

The user (caller) of the telephone terminal 101 on the caller inputs an instruction for ordering a forwarding request to be issued, by an operation of a special key provided on the key input device 111 to input the instruction, or by a special operation procedure using a ten key on the key input device 111 or the like (step S213 in FIG. 8). The key input device 111 notifies the control device 130 of the input instruction (step S214 in FIG. 8). Upon being notified of such an instruction, the control device 130 generates a SUSPEND message and a RESUME message in succession, and sends them to the call processing signal output device 124 (step S215 in FIG. 8). The call processing signal output device 124 transmits the SUSPEND message and the RESUME message toward the callee (step S216 in FIG. 8).

In the telephone terminal 100 of the callee, the call processing signal input device 115 receives the SUSPEND message and the RESUME message in succession (step S217 in FIG. 9), and notifies the control device 130 of reception of respective messages (step S218 in FIG. 9).

Upon being notified of the SUSPEND message, the control device 130 makes the forwarding request supervisory timer start measurement (step S219 in FIG. 9). If the control device 130 is notified of the RESUME message within a time interval (such as, for example, 1 second) for determining whether the signal is a forwarding request, then the control device 130 judges the signal to be a forwarding request and sends a disconnection signal (DISC) provided with a telephone number serving as the substitute communication destination to the call processing signal output device 124 (step S220 in FIG. 9). The call processing signal output device 124 outputs the disconnection signal (DISC) to the telephone network (step S221 in FIG. 9). As a result, forwarding of telephone communication using the call deflection service is executed.

Thus, in the second forwarding mode, the caller can use the forwarding and the automatic answering telephone recording properly and positively according to the signal that represents the forwarding request. In the second forwarding mode exemplified here, the signal that represents the forwarding request is adopted and automatic answering telephone recording is executed when there is no forwarding request. In the communication terminal of the invention, it is possible to adopt a signal that represents a sound recording request and execute forwarding when there is no sound recording request.

Since an operation procedure of forwarding cancel in the second forwarding mode is completely the same as the operation procedure of forwarding cancel in the first forwarding mode, description thereof will be omitted.

A third forwarding mode will now be described. In the third forwarding mode, information concerning the forwarding is sent to the caller in the form of a message using letters and symbols. In addition, in the third forwarding mode, the "Call Forwarding No Reply" is used for forwarding of telephone communication. Namely, forwarding is executed before telephone communication is shifted to a talking state.

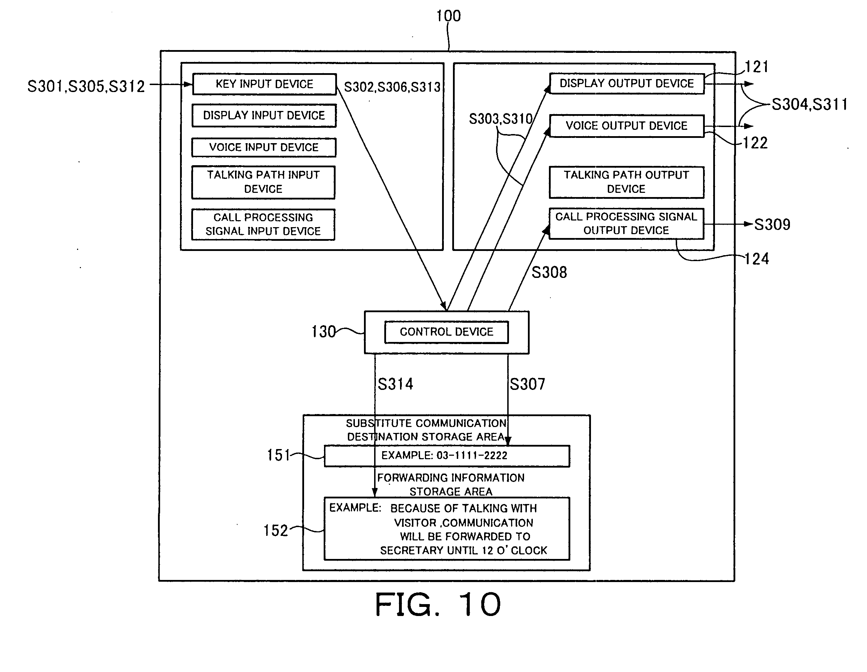

FIG. 10 is a diagram showing an operation procedure before communication incoming in the third forwarding mode.

The user of the telephone terminal 100 inputs an instruction for ordering a telephone number of a substitute communication destination to be stored, by an operation of a special key provided on the key input device 111 to input the instruction, or by a special operation procedure using a ten key or the like (step S301). The key input device 111 notifies the control device 130 of the input instruction (step S302).

Upon being notified of the instruction, the control device 130 orders the display output device 121 and the voice output device 122 to output a request for a telephone number of a substitute communication destination (step S303). The display output device 121 and the voice output device 122 respectively output a voice and a character string to that effect (step S304).

Upon confirming such outputs, the user of the telephone terminal 100 inputs the telephone number of the substitute communication destination by operating the key input device 111 (step S305). The key input device 111 notifies the control device 130 of the telephone number (step S306). The control device 130 stores the telephone number of the substitute communication destination in the substitute communication destination storage area 151 (step S307) in order to use it for determining whether a forwarding state is previously set. Furthermore, the control device 130 notifies the call processing signal output device 124 of the telephone number of the substitute communication destination and an activation request of the "Call Forwarding No Reply" (step S308) in order to register forwarding of telephone communication using the "Call Forwarding No Reply" in the telephone network. The call processing signal output device 124 outputs the telephone number of the substitute communication destination and the activation request of the "Call Forwarding No Reply" to the telephone network (step S309).

After registering the forwarding of telephone communication in the telephone network, the control device 130 orders the display output device 121 and the voice output device 122 to output a request for information concerning forwarding (step S310 ) . The display output device 121 and the voice output device 122 respectively output a voice and a character string to that effect (step S311).

Upon confirming such outputs, the user of the telephone terminal 100 inputs information concerning the forwarding, such as the substitute communication destination and until when forwarding is conducted, as characters (letters and symbols) ( step S312) by operating the key input device 111. The key input device 111 notifies the control device 130 of the information (step S313). The control device 130 stores the information in the forwarding information storage area 152 as character-based data (step S314).

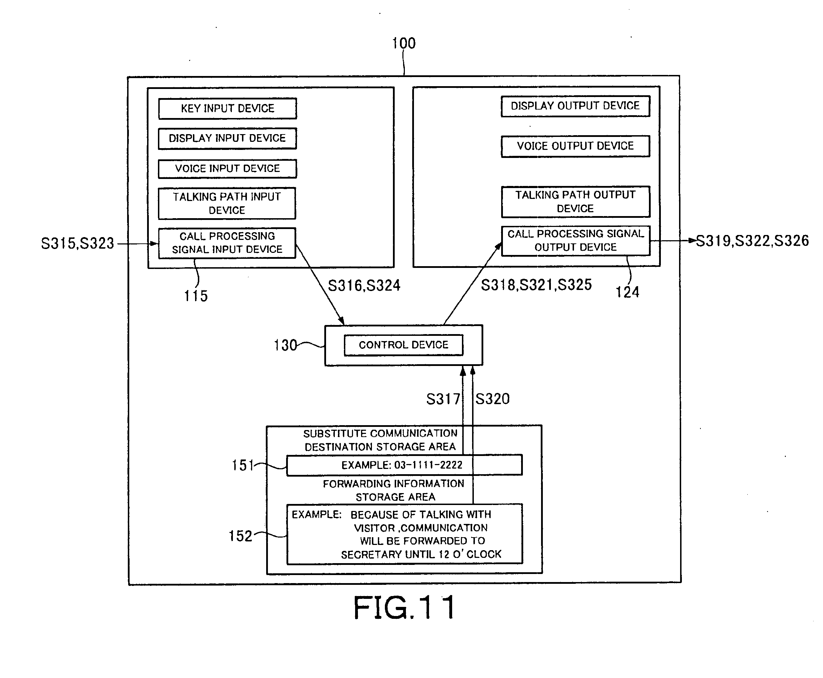

FIG. 11 is a diagram showing an operation procedure at the time of communication incoming in the third forwarding mode.

At the time of communication incoming in the third forwarding mode, an operation procedure that is completely the same as that of the steps S118 to S120 in the first forwarding mode is first executed. In other words, first, a communication incoming request is received by the call processing signal input device 115 (step S315). The call processing signal input device 115 notifies the control device 130 of the communication incoming request (step S316). The control device 130 determines whether the call is a voice call on the basis of call information contained in the communication incoming request. If the call is a voice call, then the control device 130 determines whether a telephone number of a substitute communication destination is previously stored in the substitute communication destination storage area 151 (step S317).

Upon making sure in the third forwarding mode that the telephone number of the substitute communication destination is previously stored, the control device 130 orders the call processing signal output device 124 to return an alert signal (ALERT) (step S318). The call processing signal output device 124 returns the alert signal (ALERT) (step S319). As a result, the calling state of the telephone communication is maintained, and a shift to the talking state is not effected. Furthermore, since the "Call Forwarding No Reply" is previously registered in the telephone network, a timer belonging to the telephone network starts measurement of awaiting time (such as, for example, 10 seconds).

Furthermore, the control device 130 reads out information stored in the forwarding information storage area 152 (step S320) and sends the information to the call processing signal output device 124 (step S321). The call processing signal output device 124 returns the information to the caller as a short message or user to user service using user-user information (step S322). As a result, the caller is notified of information such as the substitute communication destination and until when forwarding is conducted, in a short message form or user-user information. If the caller judges forwarding to be unnecessary, then the caller copes with this by, for example, disconnecting the telephone communication before forwarding.

If the telephone communication is not disconnected, then the "Call Forwarding No Reply" timer expiers and a disconnection message is input to the call processing signal input device 115 from the telephone network (step S323). The call processing signal input device 115 notifies the control device 130 of the disconnection message (step S324). Upon being notified of the disconnection message, the control device 130 notifies the call processing signal output device 124 of a disconnection signal (Rel) (step S325). The call processing signal output device 124 outputs the disconnection signal (Rel) to the telephone network (step S326). As a result, the telephone communication is disconnected and the telephone network automatically forwards the telephone communication to the registered substitute communication destination.

A fourth forwarding mode will now be described. The fourth forwarding mode is the same as the third forwarding mode except information concerning forwarding is notified in the form of portable telephone mail or electronic mail. Hereafter, therefore, only different points will be described.

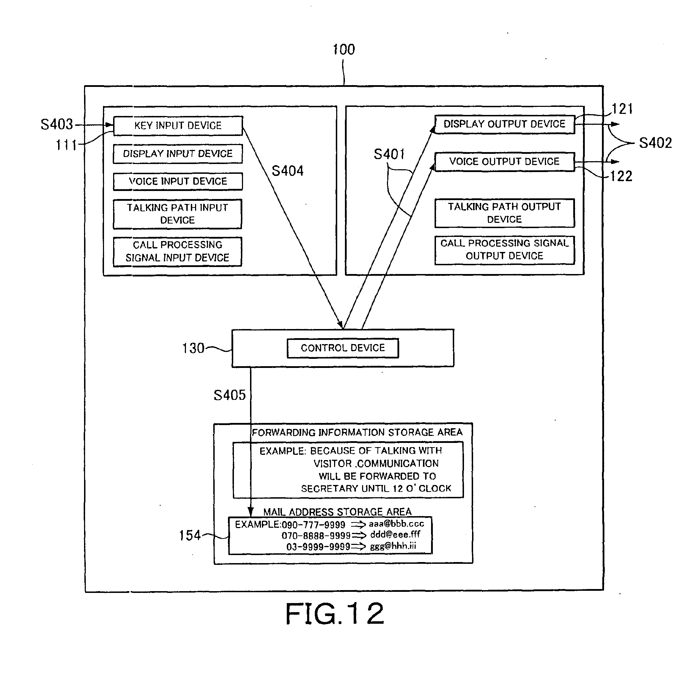

FIG. 12 is a diagram showing an operation procedure before communication incoming in the fourth forwarding mode.

In the fourth forwarding mode, the same operation procedure as that of the steps S301 to S314 shown in FIG. 10 is executed. Thereafter, the control device 130 orders the display output device 121 and the voice output device 122 to output a request for that mail address should be input (step S401). The display output device 121 and the voice output device 122 respectively output a voice and a character string to that effect (step S402).

Upon confirming such outputs, the user of the telephone terminal 100 inputs mail addresses by every caller telephone number (step S403). The key input device 111 notifies the control device 130 of the mail addresses (step S404). The control device 130 stores the mail addresses in the mail address storage area 154 so as to associate the mail addresses with caller telephone numbers (step S405).

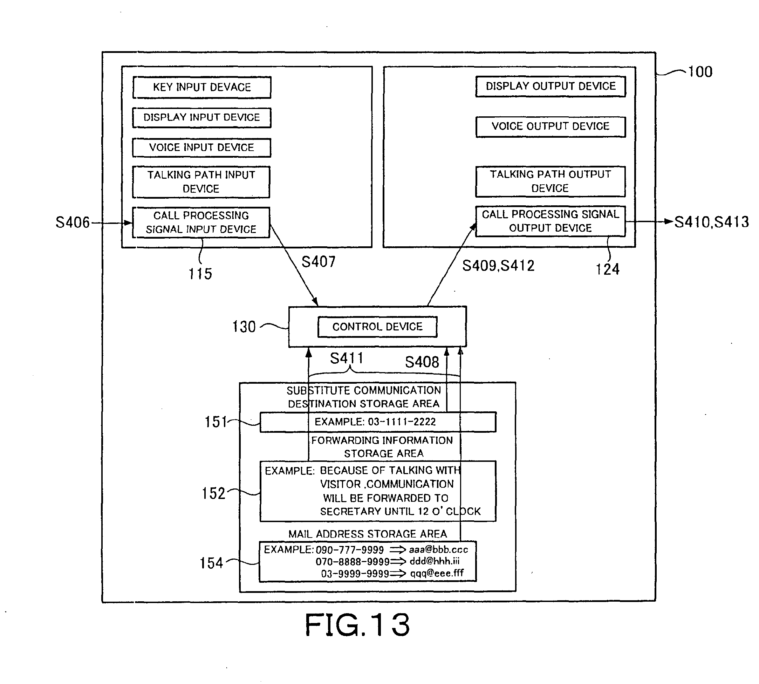

FIG. 13 is a diagram showing an operation procedure at the time of communication incoming in the fourth forwarding mode.

At the time of communication incoming in the fourth forwarding mode, a communication incoming request is first received by the call processing signal input device 115 (step S406). The call processing signal input device 115 notifies the control device 130 of the communication incoming request (step S407). The control device 130 determines whether the call is a voice call on the basis of call information contained in the communication incoming request, and discriminates a telephone number of the caller. If the call is a voice call and the telephone number of the caller has been discriminated, then the control device 130 determines whether a telephone number of a substitute communication destination is previously stored in the substitute communication destination storage area 151 (step S408).

If it is made sure that the telephone number of the substitute communication destination is previously stored in the substitute communication destination storage area 151 and the discriminated telephone number is a caller telephone number registered in the mail address storage area 154, then the control device 130 orders the call processing signal output device 124 to return an alert signal (ALERT) (step S409). The call processing signal output device 124 returns the alert signal (ALERT) (step S410). Furthermore, the control device 130 reads out information stored in the forwarding information storage area 152 and mail address registered in the the mail address storage area 154 so as to be associated with the caller telephone number (step S411) and sends the information and the mail address to the call processing signal output device 124 (step S412). The call processing signal output device 124 outputs the information as portable telephone mail or electronic mail (step S413).

Since a subsequent operation procedure is the same as that in the third forwarding mode, description thereof will be omitted.

Description of the fourth forwarding mode has been completed.

In the first and second forwarding modes, telephone communication forwarding using the call deflection service is executed. In the third and fourth forwarding modes, telephone communication forwarding using the "Call Forwarding No Reply" is executed. However, the communication terminal of the invention may be one that executes forwarding using call transfer service. In that case, it is necessary to conclude a previous contract for utilizing the call transfer service with a telephone company. At the time of communication incoming, the control device 130 generates a hooking signal and outputs the hooking signal and the telephone number of the substitute communication destination successively to the telephone network via the call processing signal output device 124. As a result, forwarding is executed.

Furthermore, in the foregoing description, telephone communication forwarding based on the call deflection service is used in the case where forwarding is conducted after the telephone communication has come in the talking state. However, the communication forwarding based on the call deflection service can also be applied to the case where telephone communication is forwarded with the telephone communication kept in the calling state.

Furthermore, in the foregoing description, a telephone terminal is shown as an example of the communication terminal. The communication terminal of the invention may also be a facsimile terminal receiving facsimile communication, or may also be a mail terminal receiving short mail or electronic mail.

According to the communication terminal of the invention, it is possible to determine on the caller's side whether forwarding is to be allowed, as heretofore described.

## Claims

1. A communication terminal comprising:
a forwarding section forwarding incoming communication to a previously set forwarding destination; and
a forwarding control section receiving a forwarding start or forwarding prohibition order signal from a sending source of the communication, and causing said forwarding section to start forwarding of the communication or to prohibit the forwarding according to the order signal.

2. A communication terminal comprising:
a forwarding section forwarding incoming communication to a previously set forwarding destination;
a notice section responsive to reception of a call of the communication, transmitting a notice to the effect that the communication is forwarded, to a sending source of the communication before the communication is shifted to a talking state; and
a forwarding start section causing said forwarding section to execute forwarding of the communication after the notice is transmitted by said notice section.

3. The communication terminal according to claim 2, wherein said notice section transmits a notice utilizing short message service.

4. The communication terminal according to claim 2, wherein said notice section transmits a notice utilizing user to user service.

5. The communication terminal according to claim 2, wherein said notice section transmits a notice utilizing electronic mail.

6. The communication terminal according to claim 1, wherein said forwarding section forwards communication by using call deflection service.

7. The communication terminal according to claim 2, wherein said forwarding section forwards communication by using call deflection service.

8. The communication terminal according to claim 1, wherein said forwarding section forwards communication by using call transfer service.

9. The communication terminal according to claim 2, wherein said forwarding section forwards communication by using call transfer service.

10. The communication terminal according to claim 1, wherein said forwarding section forwards communication by using "Call Forwarding No Reply."

11. The communication terminal according to claim 2, wherein said forwarding section forwards communication by using "Call Forwarding No Reply."

12. The communication terminal according to claim 1, further comprising a forwarding cease section, wherein
a time zone during which forwarding is effective is set in said forwarding cease section, and
when the time zone is over, said forwarding cease section prohibits said forwarding section from forwarding the communication.

13. The communication terminal according to claim 2, further comprising a forwarding cease section, wherein
a time zone during which forwarding is effective is set in said forwarding cease section, and
when the time zone is over, said forwarding cease section prohibits said forwarding section from forwarding the communication.
